# EUROPÄISCHE PATENTSCHRIFT

(11) **EP 0 268 788 B1**
(45) Veröffentlichungstag und Bekanntmachung des Hinweises auf die Patenterteilung: **24.02.1993**
(21) Anmeldenummer: 87114546.2
(22) Anmeldetag: 06.10.1987
(51) Int. Cl.: H04R 29/00

(54) **Verfahren und Einrichtung zur Funktionsprüfung eines Mikrofons**
Method and device for testing the operation of a microphone
Méthode et dispositif pour vérifier le fonctionnement d'un microphone

(30) Priorität: 29.10.1986 DE 3636720
(43) Veröffentlichungstag der Anmeldung: 01.06.1988
(73) Patentinhaber: ATLAS ELEKTRONIK GMBH, D-28305 Bremen (DE)
(72) Erfinder: Fischer, Johannes, D-2804 Lilienthal 1 (DE); Loges, Werner, D-2800 Bremen 33 (DE)

(56) Entgegenhaltungen:
- EP-A- 0 074 204
- DE-A- 2 546 367
- US-A- 3 912 880
- US-A- 4 445 361

## Beschreibung

Die Erfindung betrifft ein Verfahren zur Funktionsprüfung eines Mikrophons und eine Mikrophonprüfeinrichtung zur Durchführung des Verfahrens.

Insbesondere bei Schallmeßanlagen, in welchen eine große Anzahl von Mikrophonen unbemannt eingesetzt werden, wie z. B. bei Schallmeßanlagen zum Orten von Schallereignissen, ist es erforderlich, vor Inbetriebnahme der Schallmeßanlage und auch während des laufenden Meßbetriebs auch die Funktionsfähigkeit der einzelnen Mikrophone zu überprüfen, damit das Meßergebnis nicht durch defekte Mikrophone verfälscht wird. Dabei ist es ausreichend, lediglich eine qualitative Ja/Nein-Aussage über die Funktion der einzelnen Mikrophone zu erhalten, um so ggf. die Signale von defekten bzw. nicht ausreichend intakten Mikrophonen von der Auswertung auszuschließen.

Bei einem bekannten Verfahren zum Testen der Funktionsfähigkeit solcher in Schallmeßanlagen eingesetzten Mikrophone werden in einem Abstand von ca. 1 m von einem zu prüfenden Mikrophon durch Wedeln mit einem großflächigen Gegenstand, z. B. Jacke oder Mütze, Druckwellen erzeugt und am Mikrophonausgang die Signalspannung gemessen. Ein solches Verfahren erfordert jedoch den menschlichen Einsatz am Mikrophonort, was bei Schallmeßanlagen mit mehreren, mitunter um mehrere tausend Meter auseinanderliegenden Mikrophonanordnungen äußerst unpraktikabel ist. Ein solches Verfahren läßt sich nicht automatisieren und nicht von einer zentralen Stelle aus durchführen.

Der Erfindung liegt die Aufgabe zugrunde, ein Verfahren zur Funktionsprüfung von Mikrophonen zu schaffen, das eine schnelle und zuverlässig genaue Überprüfung der Mikrophonfunktion gestattet. Das Verfahren soll geeignet sein, mit geringem Aufwand gleichzeitig mehrere Einzelmikrophone an verschiedenen Orten zu prüfen und die Prüfung von einer mikrophonfernen, zentralen Stelle aus zu initieren.

Die Aufgabe ist durch die im Kennzeichenteil des Anspruchs 1 angegebenen Maßnahmen gelöst.

Aus EP-A-74204 ist die Verwendung der Korrelationstechnik zur Bestimmung der Stoßantwort von Schallwandlem bekannt.

Das erfindungsgemäße Verfahren ermöglicht eine zuverlässige Aussage über die Funktionsfähigkeit bzw. die Nichtfunktionsfähigkeit des geprüften Mikrophons. Durch entsprechende Festlegung der Toleranzgrenzen für den Sollwert können auch teilbeschädigte Mikrophone erkannt und ggf. eliminiert werden. Der Sollwert wird dabei durch Messen der Phasenverschiebung gewonnen, welches ein elektrisches Signal mit gleicher Frequenz wie das Prüfsignal in der zwischen Lautsprechereingang und Mikrophonausgang liegenden, von Lautsprecher, Luftstrecke und Mikrophon gebildeten intakten Übertragungsstrecke erfährt. Das erfindungsgemäße Verfahren gestattet die feste Installierung einer entsprechend integrierten Prüfeinrichtung
an dem jeweiligen Mikrophonort und das Anreizen und Auswerten aller Mikrophonüberprüfungen von bzw. in einer zentralen, von den einzelnen Mikrophonorten weit entfernten Stelle aus. Das Prüfverfahren läuft automatisch ab und bedarf keines menschlichen Eingriffes.

Eine vorteilhafte Ausgestaltung des erfindungsgemäßen Verfahrens ergibt sich aus Anspruch 2. Durch die Vervielfachung der Lautsprecher können Fehler, die in im Freien installierten Mikrophonen durch unterschiedliche Windrichtungen hervorgerufen werden, kompensiert werden. Dies ist insbesondere für Mikrophone von Bedeutung, deren Arbeitsfrequenz im höherfrequenten Bereich liegt, da der von den Windkomponenten hervorgerufene Phasenfehler mit zunehmender Frequenz ansteigt.

Eine besonders zweckmäßige Prüfeinrichtung zur Durchführung des erfindungsgemäßen Verfahrens ergibt sich aus Anspruch 3. Diese Prüfeinrichtung erreicht schon mit konventioneller Korrelationstechnik extrem gute Eigenschaften bezüglich Detektionssicherheit und Falschalarm. Der Leistungsverbrauch der gesamten Prüfeinrichtung ist gering.

Eine vorteilhafte Ausführungsform der erfindungsgemäßen Prüfeinrichtung ergibt sich aus Anspruch 7 oder 8. Durch die Festlegung signalsynchronisierter Vergleichszeitpunkte, z. B. gemäß Anspruch 8 bei jedem Maximum und Minimum des Prüfsignals, kann die Detektionssicherheit erhöht und die Falschalarmrate weiter verringert werden. Der bei dieser Ausführungsform erzielte Gewinn kann allerdings auch in verminderte elektrische Leistung oder in kürzere Integrationszeiten umgesetzt werden.

Eine vorteilhafte Ausgestaltung eines ein Mikrophon enthaltenden Sensors für Schallmeßanlagen ergibt sich aus Anspruch 10. Mikrophone für Schallmeßanlagen zum Orten von Knallereignissen arbeiten im allgemeinen im tieffrequenten Bereich. Durch die erfindungsgemäße Auswahl der Lautsprecher können extrem kleinvolumige, preiswerte Lautsprecher in den Sensor eingebaut werden, so daß dessen Volumen und Gewicht nicht durch die Integration der erfindungsgemäßen Prüfeinrichtung unzumutbar vergrößert wird. Die z. B. elektrisch seriell geschalteten Lautsprecher werden mit einem Prüfsignal konphas beaufschlagt, dessen Signalfrequenz unterhalb der Resonanzfrequenz der einzelnen Lautsprecher liegt. Das Vorhandensein von mehreren, z. B. drei Lautsprechern stellt die Erzeugung einer für die Prüfung ausreichenden akustischen Leistung sicher. Die Reihenschaltung der Lautsprecher erhöht die unterhalb der Resonanz sehr geringe Lautsprecherimpedanz, so daß die Lautsprecher besser angepaßt betrieben werden.

Eine vorteilhafte Ausführungsform des vorgenannten Sensors ergibt sich aus Anspruch 13 insbesondere in Verbindung mit Anspruch 14. Bei im Freien aufgestelltem Sensor wird dadurch ein Schutz gegen Feuchtigkeit, Nässe und Wind erzielt.

Die Erfindung ist anhand von in der Zeichnung dargestellten Ausführungsbeispielen im folgenden näher beschrieben. Es zeigen:
- Fig. 1: ein Blockschaltbild einer Prüfeinrichtung zum Testen der Funktionsfähigkeit eines Mikrophons in einer Schallmeßanlage,
- Fig. 2: eine perspektivische Darstellung eines Sensors der Schallmeßanlage mit integrierter Prüfeinrichtung gemäß Fig. 1,
- Fig. 3: eine Draufsicht einer das Sensorgehäuse in Fig. 2 abschließenden Montageplatte nach Entfernung von Mikrophon und Lautsprechern,
- Fig. 4 bis 6: jeweils ein Blockschaltbild eines Signalkorrelators in der Prüfeinrichtung gemäß Fig. 1 entsprechend dreier Ausführungsbeispiele,
- Fig. 7 und 8: jeweils ein Blockschaltbild einer Prüfeinrichtung gemäß zweier weiterer Ausführungsbeispiele.

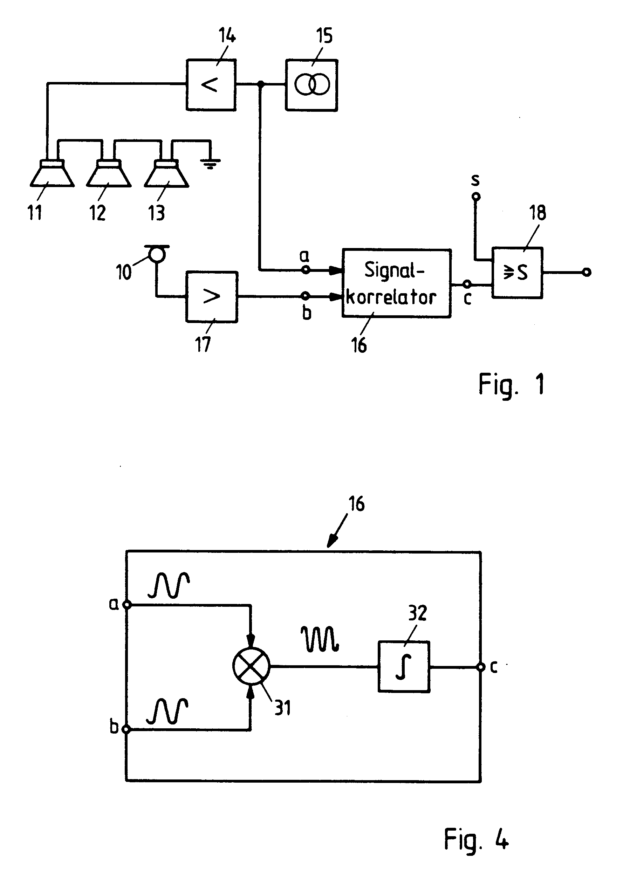

Die in Fig. 1 im Blockschaltbild dargestellte Prüfeinrichtung für ein Mikrophon 10 weist drei in Reihe geschaltete Lautsprecher 11, 12 und 13 auf, die über einen Verstärker 14 an dem Ausgang eines Signalgenerators 15 angeschlossen sind. Ein Signalkorrelator 16 ist eingangsseitig mit dem Ausgang des Signalgenerators 15 und über einen Verstärker 17 mit dem Ausgang des Mikrophons 10 verbunden und ausgangsseitig an dem einen Eingang eines Schwellwertkomparators 18 angeschlossen, an dessen anderem Eingang ein Schwellwert S liegt. Die Lautsprecher 11 bis 13 sind im festen Abstand vom Mikrophon 10 und symmetrisch um dieses herum angeordnet.

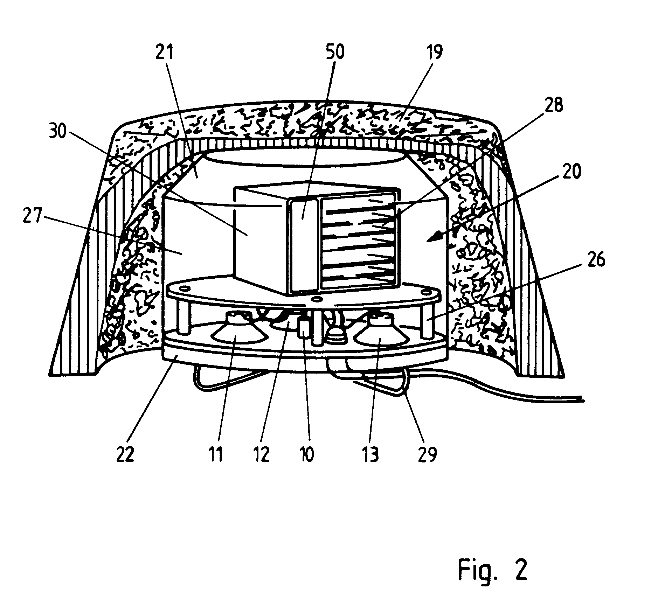

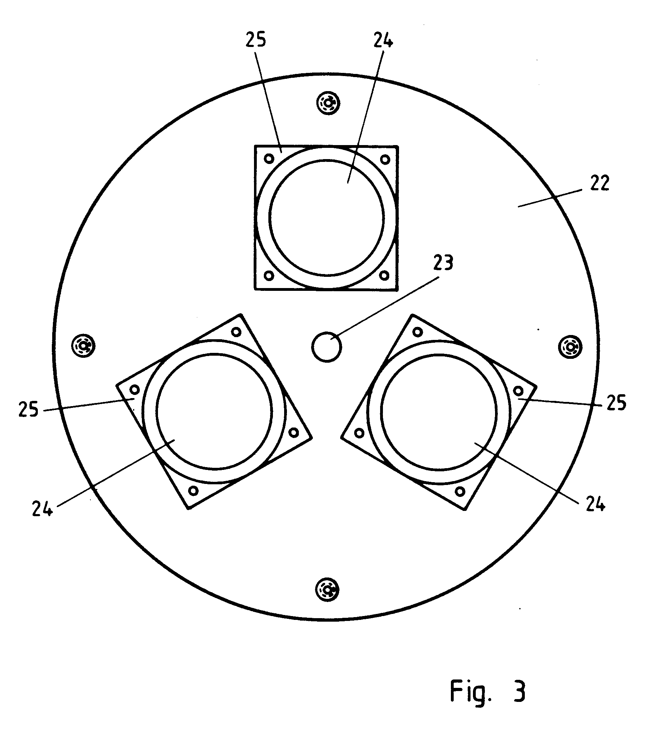

Eine bevorzugte Anordnung von Mikrophon 10 und Lautsprecher 11 bis 13 ist aus Fig. 2 und 3 ersichtlich. Fig. 2 zeigt dabei einen Sensor 20, wie er für Schallmeßanlagen zum Orten von Knallereignissen Verwendung findet. Ein topfförmiges Gehäuse 21 ist mit einer Montageplatte 22 abgeschlossen, in welcher Schallöffnungen 23 bzw. 24 für das Mikrophon 10 und die drei Lautsprecher 11 bis 13 vorgesehen sind (Fig. 3). Die Schallöffnung 23 für das Mikrophon 10 ist dabei zentral angeordnet und die Schallöffnungen 24 für die Lautsprecher 11 bis 13 symmetrisch um die Schallöffnung 23 gruppiert, so daß diese von der Schallöffnung 23 jeweils einen gleichen Abstand haben und gegeneinander um gleiche Umfangswinkel versetzt sind. Auf der Rückseite der Montageplatte 22 sind in vorgesehenen Aufnahmen 25 die Lautsprecher 11 bis 13 hinter der jeweiligen Schallöffnung 24 befestigt. Das Mikrophon 10 ist durch die Schallöffnung 23 hindurchgesteckt und in dieser befestigt. Auf der Rückseite der Montageplatte 22 ist außerdem noch über Distanzstege 26 eine Tragplatte 27 zur Halterung einer Box 30 befestigt, die eine Stromversorgungsbatterie 28 und den elektrischen Schaltungsteil 50 der Prüfeinrichtung enthält. Das die Montageplatte 22 übergreifende Gehäuse 21 deckt Mikrophon 10, Lautsprecher 11 bis 13, Tragplatte 27 und Box 30 ab und sorgt für ein hermetisch abgeschlossenes Luftvolumen. Auf der Vorder- bzw. nach Aufstellung des Sensors Unterseite der Montageplatte 22 sind Auflagestützen 29 zum Aufstellen des Sensors 20 auf den Erdboden vorgesehen. Am Aufstellungsort wird über den Sensor 20 eine Windschutzhaube 19 gestülpt, die in Fig. 2 aufgebrochen dargestellt ist.

Sensoren für Schallmeßanlagen zur Ortung von Knallereignissen arbeiten im tieffrequenten Bereich (unter 70 Hz). Damit liegt der Arbeitsfrequenzbereich des Mikrophons 10 und die Frequenz des vom Signalgenerator 15 erzeugten sinusförmigen Prüfsignals ebenfalls im niederfrequenten Bereich. Die Lautsprecher 11 bis 13 sind sog. Mittelhochtonlautsprecher, deren Resonanzfrequenz oberhalb des Arbeitsfrequenzbereiches des Mikrophons 10 und der Frequenz des Prüfsignals liegt. Diese Lautsprecher sind sehr kleinvolumig und preiswert, so daß das Zusatzvolumen im Sensor 20 und die Zusatzkosten für den Sensor 20 durch die Lautsprecher minimal bleiben. Durch die Reihenschaltung der drei Lautsprecher 11 bis 13, die jeweils eine Nennimpedanz von beispielsweise 4Ω aufweisen, wird eine bessere Anpassung an den Verstärker erzielt und dadurch die insgesamt aufzubringende Wirkleistung gering gehalten.

Mit der Prüfeinrichtung wird die Funktion des Mikrophons 10 im Sensor 20 wie folgt geprüft:

Nach Aktivieren der Prüfeinrichtung, was z. B. über eine Steuerleitung von einem mikrophonfernen Ort aus erfolgen kann, generiert der Signalgenerator 15 ein sinusförmiges Prüfsignal, dessen Frequenz im Arbeits- oder Nutzfrequenzbereich des Mikrophons 10 liegt. Das Prüfsignal gelangt nach Verstärkung im Verstärker 14 auf die Eingänge der Lautsprecher 11 bis 13. Das Vorsehen von insgesamt drei Lautsprechern stellt sicher, daß trotz Betreiben der Lautsprecher 11 bis 13 unterhalb der Resonanzfrequenz eine genügend hohe akustische Leistung abgestrahlt wird. Das Mikrophonausgangssignal wird im Verstärker 17 verstärkt und dem Signalkorrelator 16 zugeführt, an dem ebenfalls das Prüfsignal vom Ausgang des Signalgenerators 15 als Referenz liegt. Im Signalkorrelator 16 erfolgt nunmehr eine Messung der Phasendifferenz zwischen den beiden Eingangssignalen, also dem Mikrophonausgangssignal und dem Prüfsignal, und in dem nachgeschalteten Schwellwertkomparator 18 ein Vergleich der gemessenen Phasendifferenz mit einem vorgegebenen Sollwertbereich in der Weise, daß der Signalkorrelator 16 in einem vorgegebenen Integrationszeitraum eine von der Phasendifferenz zwischen den Eingangssignalen abhängige Ausgangsspannung generiert und diese Ausgangsspannung im Schwellwertkomparator 18 mit dem Schwellwert S verglichen wird. Übersteigt die Spannung den Schwellwert S, so wird am Ausgang des Schwellwertkomparators 18 ein Gutsignal ausgegeben. Wird die Schwelle S von der vom Signalkorrelator 16 erzeugten Spannung nicht erreicht, so steht am Ausgang des Schwellwertkomparators 18 ein Schlechtsignal an. Je nach Ausbildung des Signalkorrelators 16 kann das Erscheinen des Gut- und Schlechtsignals auch vertauscht sein, d. h. in umgekehrter Zuordnung von dem Nichterreichen bzw. Überschreiten der Schwelle S abhängig gemacht werden. Das als Schlecht- oder Gutsignal am Ausgang des Schwellwertkomparators 18 anstehende Prüfergebnis wird über eine Signalleitung an eine zentrale Auswertestelle übertragen und kann dort entsprechend verarbeitet werden.

Ein erstes Ausführungsbeispiel für den Signalkorrelator 16 ist in Fig. 4 dargestellt. Hierbei handelt es sich um einen konventionellen 0°-Korrelator. Er besteht aus einem Vierquadranten-Analogmultiplizierer 31, dem über die Eingänge a und b des Signalkorrelators 16 einerseits das Prüfsignal und andererseits das Mikrophonausgangssignal zugeführt wird. Der Ausgang des Analogmultiplizierers 31 ist mit einem Integrator 32 verbunden, dessen Ausgang den Ausgang c des Signalkorrelators 16 bildet.

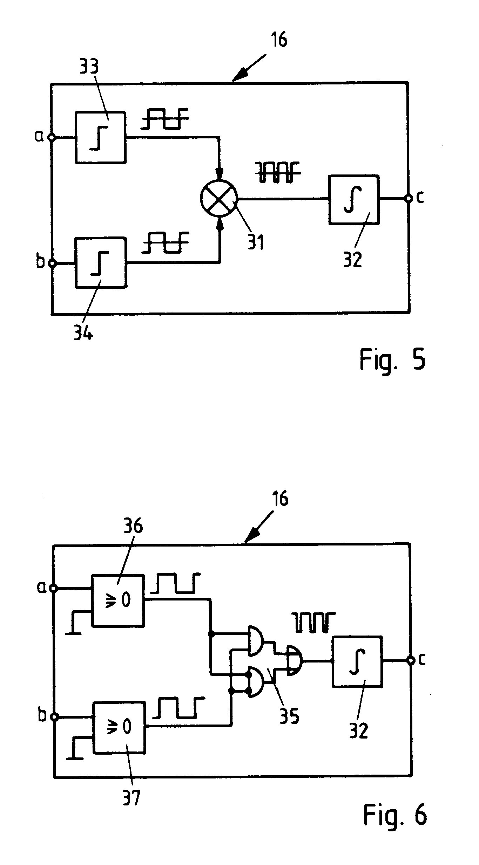

Ein weiteres Ausführungsbeispiel des Signalgenerators 16 ist in Fig. 5 dargestellt. Hier handelt es sich um einen sog. analogen Klipper-Korrelator, der sich von dem Signalgenerator 16 gemäß Fig. 4 insofern unterscheidet, daß zwischen den Eingängen a und b des Signalkorrelators 16 und den Eingängen des Multiplizierers 31 jeweils ein Klipper 33 bzw. 34 eingeschaltet ist.

Bei dem Ausführungsbeispiel des Signalgenerators 16 in Fig. 6 ist in Abwandlung des vorbeschriebenen Signalkorrelators den Klippern 33 und 34 ein Gleichrichter zugeordnet. Klipper und Gleichrichter bilden jeweils einen Komparator 36 bzw. 37 mit der Komparator- bzw. Vergleichsspannung Null. Jeder Komparator 36, 37 erzeugt einen Rechteckimpuls, dessen Flanken an den Stellen erscheinen, bei welchen am Eingang a bzw. b die Polarität des Eingangssignals wechselt. Der Vierquadranten-Analogmultiplizierer 31 in Fig. 5 ist durch einen Einquadranten-Multiplizierer ersetzt, der hier als digitales Äquivalenzgatter 35 ausgeführt ist. Liegt zwischen den beiden Eingangssignalen an den Eingängen a und b des Signalkorrelators 16 eine Phasendifferenz, so treten die Flanken der beiden Eingangssignale an dem Äquivalenzgatter 35 zu unterschiedlichen Zeitpunkten auf. Da das Äquivalenzgatter 35 auf jeden Polaritätswechsel an einem seiner beiden Eingänge mit einem Polaritätswechsel an seinem Ausgang reagiert, entsteht am Ausgang des Äquivalenzgatters 35 eine symmetrische Rechteckimpulsfolge, deren Tastverhältnis proportional der Phasendifferenz zwischen den Eingangssignalen an den Eingängen a und b des Signalkorrelators 16 ist. Die Rechteckimpulse werden innerhalb eines vorgegebenen Integrationsintervalles im Integrator 32 aufsummiert, und am Ausgang c des Signalkorrelators 16 liegt eine Gleichspannung, die ebenfalls direkt proportional der Phasendifferenz zwischen dem Prüfsignal und dem Mikrophonausgangssignal ist. Der Schwellwert S am nachfolgenden Schwellwertkomparator 18 wird innerhalb vorgegebener Toleranzgrenzen dadurch festgelegt, daß die Phasenverschiebung, welches das Prüfsignal bei intakter Übertragungsstrecke zwischen Lautsprechereingang und Mikrophonausgang erfährt, gemessen und als Sollwert festgelegt wird.

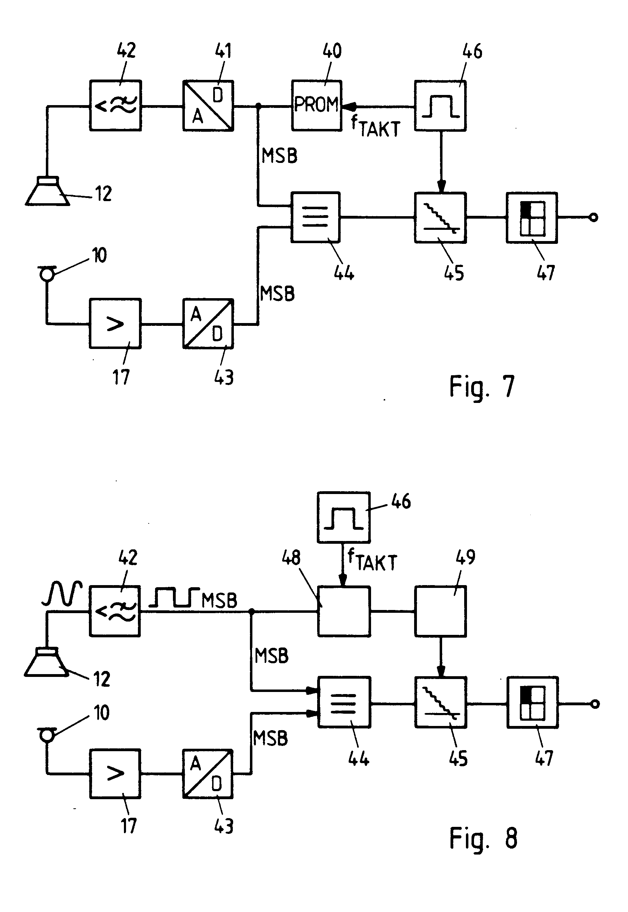

In Fig. 7 ist ein weiteres Blockschaltbild für eine mögliche Ausgestaltung der in Fig. 1 prinzipiell dargestellten Prüfeinrichtung zur Funktionsprüfung des Mikrophons 10 dargestellt. Von den drei Lautsprechern ist zur Vereinfachung nur der Lautsprecher 12 gezeichnet. Der Signalgenerator zur Erzeugung eines sinusförmigen Prüfsignals ist durch einen Lesespeicher (PROM) 40 ersetzt, der über einen Digital-Analog-Wandler 41 und einen Verstärker 42 mit Tiefpaßverhalten an dem Lautsprecher 12 angeschlossen ist. Das Ausgangssignal des Mikrophons 10 wird nach Verstärkung in dem Verstärker 17 in einem Analog-Digital-Wandler 43 digitalisiert. In Abwandlung der vorstehend beschriebenen Prüfeinrichtung ist hier nicht das Prüfsignal selbst als Referenz dem Signalkorrelator 16 zugeführt, sondern ein von dem Prüfsignal abgeleitetes und mit diesem konphases Referenzsignal. Ferner ist dem Signalkorrelator 16 nicht das Mikrophonausgangssignal unmittelbar zugeführt, sondern ein von dem Mikrophonausgangssignal abgeleitetes und mit diesem konphases Meßsignal. Referenzsignal und Meßsignal werden hierbei von dem höchstwertigen Bit (MSB) des digitalen Prüfsignals am Ausgang des Lesespeichers 40 bzw. von dem höchstwertigen Bit (MSB) des digitalen Mikrophonausgangssignals am Ausgang des Analog-Digital-Wandlers 43 gebildet. Beide MSB's kennzeichnen das Vorzeichen, d. h. die Polarität, des Prüf- bzw. Mikrophonausgangssignals. Die beiden Vorzeichenbits werden einem Äquivalenzgatter 44 zugeführt, das diese auf Identität prüft. Der Ausgang des Äquivalenzgatters 44 ist an dem Enable-Eingang eines Abwärtszählers 45 angeschlossen, dessen Zähleingang mit einem Taktimpulsgenerator 46 in der Weise verbunden ist, daß mit jedem an den Lesespeicher 40 von dem Taktimpulsgenerator 46 angelegten Leseimpuls ein Zählimpuls an den Zähleingang des Abwärtszählers 45 gelangt. Der Abwärtszähler 45 weist einen Set-Eingang auf, über welchen der Abwärtszähler 45 auf einen vorgebbaren Zählerinhalt einstellbar ist. Mit jedem Zählimpuls am Zähleingang wird der Zählerinhalt um "1" reduziert, sofern am Enable-Eingang des Abwärtszählers 45 ein Enable-Signal anliegt. Das Enable-Signal wird von dem Äquivalenzgatter 44 dann und so lange erzeugt, wie die MSB am Ausgang des Lesespeichers 40 und am Ausgang des Analog-Digital-Wandlers 43 Identitiät zeigen. Bei Erreichen des Nulldurchgangs des Abwärtszählers 45 wird über den Ausgang "Ripple-Carry" des Abwärtszählers 45 ein Ausgangsimpuls an den Bithalter 47 gegeben, der das Auftreten eines "Gutsignals" am Ausgang des Bithalters 47 bewirkt. Dieses Gutsignal liegt so lange an dem Ausgang des Bithalters 47, bis die Prüfeinrichtung abgeschaltet oder ein neuer Prüfvorgang gestartet wird. Wird nunmehr die Voreinstellung des Abwärtszählers 45 auf eine Entscheidungsschwelle von z. B. 90 % der Zählimpulse gesetzt, und wird während der festgelegten Anzahl von Zählimpulsen der Nulldurchgang des Abwärtszählers 45 erreicht, so ist die Prüfung des Mikrophons positiv, andernfalls negativ.

Bei geschickter Wahl der Taktfrequenz des Taktimpulsgenerators 46 kann die vorstehend beschriebene Prüfeinrichtung vereinfacht werden. Dies ist in Fig. 8 dargestellt. Anstelle des Lesespeichers (PROM) 40 und des Digital-Analog-Wandlers 41 in Fig. 7 treten nunmehr ein 3bit-Zähler 48 und eine Logikschaltung 49. Von dem Ausgang des Zählers 48 ist lediglich der das MSB führende Ausgang über den Verstärker 42 mit dem Lautsprecher 12 verbunden. Der gleiche Ausgang ist - ebenso wie in Fig. 7 - an den einen Eingang des Äquivalenzgatters 44 geführt. Alle Zählerausgänge des Zählers 48 sind an die Logikschaltung 49 angeschlossen, deren Ausgang mit dem Zählimpulseingang des Abwärtszählers 45 verbunden ist. Die Logikschaltung 49 ist so ausgebildet, daß bei dem Zählerstand "2" und "6" ein Zählimpuls an den Abwärtszähler 45 gelangt. Der Zähler 48 wird von dem Taktimpulsgenerator 46 mit Taktfrequenz f_{Takt} hochgezählt und setzt sich bei Erreichen seines maximalen Zählerstandes wieder zurück. Die Signalfrequenz des an den Lautsprecher 12 gelangenden, nach Tiefpaßfilterung etwa sinusförmigen Prüfsignals beträgt durch Auswertung nur des MSB 1/8 f_{Takt}. Durch die Logikschaltung 49 gelangt immer ein Zählimpuls an den Abwärtszähler 45, wenn das Prüfsignal gerade sein Minimum oder Maximum erreicht hat. Damit wird die Identität zwischen Prüfsignal und Mikrophonausgangssignal - bzw. die Identität der Vorzeichen dieser Signale - immer nur bei den Extremwerten des Prüfsignals geprüft, wodurch die Detektionssicherheit weiter erhöht wird.

Die Erfindung ist nicht auf die vorstehend beschriebenen Ausführungsbeispiele beschränkt. So genügt für die Prüfung des Mikrophons ein einziger Lautsprecher, der nur genügend akustische Leistung abstrahlen muß. Er wird dabei zweckmäßigerweise im Abstand von etwa 3 cm unmittelbar vor dem Mikrophon angeordnet. Dabei ist es auch nicht notwendig, den Lautsprecher unterhalb der Resonanzfrequenz zu betreiben. Lediglich bei im tieffrequenten Bereich arbeitenden Mikrophonen von Schallmeßanlagen ist es aus Gründen der Einsparung von Bauvolumen eines Mikrophon und Prüfeinrichtung enthaltenden Sensors und seiner preisgünstigen Herstellung zweckmäßig, Mittelhochtonlautsprecher einzusetzen und diese mit dem Prüfsignal mit seiner unterhalb ihrer Resonanzfrequenz liegenden Prüfsignalfrequenz zu betreiben. Durch Vorsehen mehrerer Lautsprecher kann eine für das Prüfen des Mikrophons ausreichende akustische Leistung abgestrahlt werden.

Bei Mikrophonen, die im Freien betrieben werden, ist die symmetrische Anordnung von mehreren, jedoch mindestens drei Lautsprechern konzentrisch um das Mikrophon herum und im gleichen Abstand voneinander empfehlenswert, da hierdurch Einflüsse in der Mikrophonausgangsspannung, die durch Windkomponenten hervorgerufen werden und zu Fehlern bei der Prüfung führen können, eingeschränkt werden. Diese Anordnung gewinnt an Bedeutung bei Mikrophonen, die im höherfrequenten Bereich genutzt werden, denn der vom übergelagerten Wind hervorgerufene Fehler wächst mit zunehmender Frequenz des Prüfsignals.

## Patentansprüche

1. Verfahren zur Funktionsprüfung eines Mikrophons, dadurch gekennzeichnet, daß mindestens ein Lautsprecher (11 bis 13) im festen, vorzugsweise geringen Abstand vom Mikrophon (10) angeordnet und mit einem Prüfsignal beaufschlagt wird, dessen Signalfrequenz im Arbeitsfrequenzbereich des Mikrophons (10) liegt, daß die Phasendifferenz zwischen Mikrophonausgangssignal und dem Prüfsignal gemessen wird, daß die gemessene Phasendifferenz mit einem toleranzbehafteten Sollwert verglichen wird und daß ein Gutsignal bzw. ein Schlechtsignal ausgegeben wird, wenn die gemessene Phasendifferenz innerhalb bzw. außerhalb des Toleranzbereiches liegt.

2. Verfahren nach Anspruch 1, dadurch gekennzeichnet, daß mindestens drei im wesentlichen identische Lautsprecher (11 bis 13) in gleichem Abstand vom Mikrophon und in einem gleichen Abstand voneinander angeordnet und mit dem Prüfsignal konphas belegt werden.

3. Prüfeinrichtung zum Durchführen des Verfahrens nach Anspruch 1 oder 2, dadurch gekennzeichnet, daß der mindestens eine bzw. die vorzugsweise in Reihe geschalteten mindestens drei Lautsprecher (11 bis 13) an einem Signalgenerator (15) angeschlossen ist bzw. sind, der ein vorzugsweise sinusförmiges Prüfsignal erzeugt, daß ein Signalkorrelator (16) einerseits mit einem von dem Mikrophonausgangssignal abgeleiteten und mit diesem konphasen Meßsignal und andererseits mit einem von dem Prüfsignal abgeleiteten und mit diesem konphasen Referenzsignal belegt ist und eine von der Phasendifferenz der beiden Eingangssignale abhängige Ausgangsspannung generiert, und daß am Ausgang des Signalkorrelators (16) ein mit einem Schwellwert (S) belegter Komparator (18) angeschlossen ist, an dessen Ausgang das Gut- bzw. Schlechtsignal abnehmbar ist.

4. Prüfeinrichtung nach Anspruch 3, dadurch gekennzeichnet, daß der Signalkorrelator (16) mit seinem einen Eingang an dem Ausgang des Mikrophons (10) und mit seinem anderen Eingang an dem Ausgang des Signalgenerators (15) angeschlossen ist und daß das Meßsignal von dem Mikrophonausgangssignal und das Referenzsignal von dem Prüfsignal selbst gebildet ist.

5. Prüfeinrichtung nach Anspruch 4, dadurch gekennzeichnet, daß der Signalkorrelator (16) einen Multiplizierer (31) und einen diesem nachgeschalteten Integrator (32) aufweist, wobei die Eingänge des Multiplizierers (31) die Eingänge (a, b) des Signalkorrelators (16) bilden und der Ausgang des Integrators (32) den Ausgang (c) des Signalkorrelators (16) bildet (Fig. 4 und 5).

6. Prüfeinrichtung nach Anspruch 4, dadurch gekennzeichnet, daß der Multiplizierer als Äquivalenzgatter (35) ausgebildet ist und zwischen dem Äquivalenzgatter (35) und den Eingängen (a, b) des Signalkorrelators (16) jeweils ein Komparator (36, 37) mit auf etwa Null eingestellter Komparatorspannung eingeschaltet ist (Fig. 6).

7. Prüfeinrichtung nach Anspruch 3, dadurch gekennzeichnet, daß der Signalgenerator einen Lesespeicher (40) aufweist, in welchem Amplitudenwerte des Prüfsignals digital abgespeichert sind, daß der Signalausgang des Lesespeichers (40) über einen Digital-Analog-Wandler (41) und einen Tiefpaß (42) mit dem Lautsprecher (12) verbunden ist, daß dem Ausgang des Mikrophons (10) ein Analog-Digital-Wandler (43) nachgeschaltet ist, daß der Signalkorrelator mit Komparator ein Äquivalenzgatter (44), dem jeweils das höchstwertige Bit (Vorzeichenbit MSB) vom Ausgang des Lesespeichers (40) und vom Ausgang des Analog-Digital-Wandlers (43) zugeführt ist, und einen mit seinem Enable-Eingang an dem Äquivalenzgatter (44) angeschlossenen, an seinem Zähleingang mit dem Lesetakt des Lesespeichers (40) belegten Abwärtszähler (45) aufweist, der mit Prüfbeginn auf einen den Schwellwert darstellenden Zählerstand einstellbar ist und bei Erreichen seiner Nullstellung einen Ausgangsimpuls generiert (Fig. 7).

8. Prüfeinrichtung nach Anspruch 3, dadurch gekennzeichnet, daß der Signalgenerator einen von einem Taktgenerator (46) getakteten Mehrbit-Zähler (48) und eine Logikschaltung (49) und der Signalkorrelator mit Komparator ein Äquivalenzgatter (44) und einen Abwärtszähler (45) mit Zähl-, Set-und Enable-Eingang aufweist, der mit Prüfbeginn über seinen Set-Eingang auf einen den Schwellwert darstellenden Zählerstand einstellbar ist und bei Erreichen seiner Nullstellung einen Ausgangsimpuls generiert, daß die Zählerausgänge des Mehrbit-Zählers (48) mit der Logikschaltung (49) verbunden sind, die derart ausgebildet ist, daß in jeder Zählperiode des Mehrbit-Zählers bei Erreichen eines Viertels und eines Dreiviertels von dessen maximalen Zählerinhalts an ihrem Ausgang ein Zählimpuls auftritt, daß die Logikschaltung (49) mit dem Zählimpulseingang und das Äquivalenzgatter (44) mit dem Enable-Eingang des Abwärtszählers (45) verbunden ist, daß der das höchstwertige Bit (MSB) führende Ausgang des Mehrbit-Zählers (48) über einen integrierenden Verstärker (42) mit dem Lautsprecher (12) und mit einem Eingang des Äquivalenzgatters (44) verbunden ist, daß dem Ausgang des Mikrophons (10) ein Analog-Digital-Wandler (43) nachgeschaltet ist und daß der das höchstwertige Bit (MSB) führende Ausgang des Analog-Digital-Wandlers (43) mit dem anderen Eingang des Äquivalenzgatters (44) verbunden ist (Fig. 8).

9. Prüfeinrichtung nach Anspruch 7 oder 8, dadurch gekennzeichnet, daß dem Abwärtszähler (45) eine Ausgangsimpuls-Halteschaltung (47) nachgeschaltet ist, die den Ausgangsimpuls als Gutsignal ausgibt.

10. Sensor (20) zum Schallempfang für eine Schallmeßanlage, mit einem Mikrophon, gekennzeichnet durch mindestens eine Prüfeinrichtung nach einem der Ansprüche 3 bis 9, bei welcher der mindestens eine bzw. die mindestens drei Lautsprecher (11 bis 13) jeweils eine oberhalb der Prüfsignalfrequenz liegende Resonanzfrequenz aufweist bzw. aufweisen.

11. Sensor nach Anspruch 10, dadurch gekennzeichnet, daß der bzw. die Lautsprecher (11 bis 13) zusammen mit dem Mikrophon (10) in einem Gehäuse (21) mit hermetisch abgeschlossenem Luftvolumen angeordnet ist bzw. sind.

12. Sensor nach Anspruch 11, dadurch gekennzeichnet, daß das etwa topfförmig ausgebildete Gehäuse (21) mit einer Schallöffnungen (23, 24) aufweisenden Montageplatte (22) abgeschlossen ist, an welcher Mikrophon (10) und Lautsprecher (11 bis 13) hinter den entsprechenden Schallöffnungen (23, 24) befestigt sind.

13. Sensor nach Anspruch 12, dadurch gekennzeichnet, daß die Schallöffnung (23) für das Mikrophon (10) zentral und die Schallöffnungen (24) für die mindestens drei Lautsprecher (11 bis 13) um die Mikrophonschallöffnung (23) herum symmetrisch angeordnet sind.

14. Sensor nach Anspruch 12 oder 13, dadurch gekennzeichnet, daß die Montageplatte (22) sich an der dem Erdboden zugekehrten Seite des Gehäuses (21) befindet.

## Claims

1. Method for functional testing of a microphone, characterised in that at least one loudspeaker (11 to 13) is situated at a fixed and preferably short distance from the microphone (10) and is fed with a test signal whose signal frequency lies in the operating frequency range of the microphone (10), that the phase difference between the microphone output signal and the test signal is measured, that the measured phase-difference is compared with a nominal value lying within certain tolerance limits, and that a "go" signal or a "no go" signal is output if the measured phase-difference lies inside or outside (respectively) the tolerance range.

2. Method as per Claim 1, characterised in that at least three largely identical loudspeakers (11 to 13) are situated at equal distances from the microphone and at equal distances from one another, and are fed with the test signal in an in-phase manner.

3. Test system for performing the method as per Claim 1 or 2, characterised in that the minimum of one, or preferably the minimum of three series-connected loudspeakers (11 to 13), is or are connected to a signal generator (15) which generates a preferably sinusoidal test signal, that a signal correlator (16) is fed on the one hand with a measurement signal which is derived from the microphone output signal and is in phase with it, and is fed on the other hand with a reference signal which is derived from the test signal and is in phase with it, and generates an output voltage which depends on the phase difference between the two input signals, and that connected to the output of the signal correlator (16) there is a comparator (18) which has a threshold value (S) and at whose output the "go" or "no go" signal can be tapped off.

4. Test system as per Claim 3, characterised in that the signal correlator (16) has one of its inputs connected to the output of the microphone (10) and has its other input connected to the output of the signal generator (15) and that the measurement signal is formed by the microphone output signal, and the reference signal is formed by the test signal itself.

5. Test system as per Claim 4, characterised in that the signal correlator (16) has a multiplier (31) and an integrator (32) connected following the multiplier (31), with the inputs of the multiplier (31) forming the inputs (a, b) of the signal correlator (16), and the output of the integrator (32) forming the output (c) of the signal correlator (16) (Figs 4 and 5).

6. Test system as per Claim 4, characterised in that the multiplier is designed as an equivalence gate (35) and that, between the equivalence gate (35) and each of the inputs (a, b) of the signal correlator (16), there is a comparator (36, 37) with a comparator voltage adjusted to approximately zero (Fig. 6).

7. Test system as per Claim 3, characterised in that the signal generator has a read-only memory (40) in which amplitude values of the test signal are stored digitally, that the signal output of the read-only memory (40) is connected to the loudspeaker (12) via a digital/analog converter (41) and a low-pass filter (42), that the output of the microphone (10) has an analog/digital converter (43) connected following it, that the signal correlator with comparator has an equivalence gate (44) to which the most significant bit (sign bit MSB) from the output of the read-only memory (40) and from the output of the analog/digital converter (43) is fed, and has a down counter (45) whose enable input is connected to the equivalence gate (44) and whose counting input is fed with the read clock of the read-only memory (40) and which can be set at the beginning of the test to a counter status representing the threshold value and generates an output pulse when its zero setting is reached (Fig. 7).

8. Test system as per Claim 3, characterised in that the signal generator has a multibit counter (48) clocked by a clock generator (46) and has a logic circuit (49), and that the signal correlator with comparator has an equivalence gate (44) and a down counter (45) with a counting input, a set input and an enable input, which can be set at the beginning of the test via its set input to a counter status representing the threshold value and, on reaching its zero setting, generates an output pulse, that the counter outputs of the multibit counter (48) are connected to the logic circuit (49) which is designed so that, in each counting period of the multibit counter, a counting pulse occurs at the output of the logic circuit (49) on reaching a quarter and three-quarters of the maximum counter-content of the multibit counter (48), that the logic circuit (49) is connected to the counting pulse input, and the equivalence gate (44) is connected to the enable input of the down counter (45), that the output of the multibit counter (48) carrying the most significant bit (MSB) is connected via an integrating amplifier (42) to the loudspeaker (12) and to one input of the equivalence gate (44), that the output of the microphone (10) is followed by an analog/digital converter (43) and that the output of the analog/digital converter (43) carrying the most significant bit (MSB) is connected to the other input of the equivalence gate (44) (Fig. 8).

9. Test system as per Claim 7 or 8, characterised in that the down counter (45) is followed by an output pulse holding circuit (47) which outputs the output pulse as a "go" signal.

10. Sensor (20) for sound reception for a sound measurement system, with a microphone, characterised by at least one test system as per one of the Claims 3 to 9, in which the minimum of one or the minimum of three loudspeakers (11 to 13) each has or have a resonance frequency lying above the test signal frequency.

11. Sensor as per Claim 10, characterised in that the loudspeaker or loudspeakers (11 to 13) is or are situated together with the microphone (10) in a housing (21) with a hermetically sealed-in volume of air.

12. Sensor as per Claim 11, characterised in that the approximately pot-shaped housing (21) is closed by a mounting plate (22) which has sound openings (23, 24) and to which the microphone (10) and loudspeakers (11 to 13) are fixed behind the appropriate sound openings (23, 24).

13. Sensor as per Claim 12, characterised in that the sound opening (23) for the microphone (10) is situated centrally and the sound openings (24) for the minimum of three loudspeakers (11 to 13) are situated symmetrically around the microphone sound opening (23).

14. Sensor as per Claim 12 or 13, characterised in that the mounting plate (22) is situated on the side of the casing (21) facing the ground.

## Revendications

1. Procédé pour effectuer un test de fonctionnement de microphone caractérisé par le fait qu'au moins un haut-parleur (11 à 13) a été disposé de préférence à faible distance du microphone 10 et alimenté par un signal de test dont la fréquence de signal se trouve en deçà de la gamme de fréquences de travail du microphone (10), que la différence de phase entre le signal de sortie de microphone et le signal de test a été mesuré, que la différence de phase mesurée a été comparée à une valeur nominale située dans une certaine limite de tolérance et qu'un signal "go", respectivement "no go" est sorti, si la différence de phase mesurée se trouve en deçà ou en dehors de la limite de tolérance.

2. Procédé conforme à la revendication 1, caractérisé par le fait qu'au moins trois haut-parleurs (11 à 13) dans l'ensemble identiques ont été disposés à égales distances non seulement du microphone, mais également entre eux et qu'ils sont alimentés en phase avec le signal de test.

3. Système de test permettant de réaliser le procédé conformément à la revendication 1 ou 2 et caractérisé par le fait qu'au moins un, ou de préférence le minimum de trois haut-parleurs (11 à 13) reliés en série, est/sont relié(s) à un générateur de signaux (15) produisant un signal de test de préférence sinusoïdal, qu'un corrélateur de signal (16) est alimenté d'une part par un signal de mesure dérivé du signal de sortie de microphone et qu'il est en phase avec celui-ci et qu'il est d'autre part, alimenté par un signal de référence dérivé du signal de test et qu'il est en phase avec celui-ci et qu'il produise une tension de sortie fonction de la différence de phase entre les deux signaux d'entrée et qu'en liaison avec la sortie du corrélateur de signaux (16), se trouve un comparateur (18) disposant d'une valeur de seuil (S) à la sortie duquel, le signal "go" ou "no go" peut être prélevé.

4. Système de test conforme à la revendication 3, caractérisé par le fait que le corrélateur de signaux (16) est par l'une de ses entrées relié à la sortie du microphone (10) et que son autre entrée est reliée à la sortie du générateur de signaux (15) et que le signal de mesure est formé par le signal de sortie de microphone et que le signal de référence est formé par le signal de test proprement dit.

5. Système de test conforme à la revendication 4, caractérisé par le fait, que le corrélateur de signaux (16), dispose d'un multiplicateur (31) et d'un intégrateur (32) disposé en aval de ce dernier au quel cas, les entrées du multiplicateur (31) forment les entrées (a, b) du corrélateur de signaux (16), et la sortie de l'intégrateur (32) forme la sortie (c) du corrélateur de signaux (16) (figures 4 et 5).

6. Système de test conforme à la revendication 4 caractérisé par le fait que le multiplicateur a été conçu sous forme d'une porte d'équivalence (35) et qu'entre la porte d'équivalence (35) et chacune des entrées (a, b) du corrélateur de signaux (16), se trouve un comparateur (36, 37) à tension de comparateur réglée sur environ zéro (fig.6).

7. Système de test conforme à la revendication 3, caractérisé par le fait que le générateur de signaux dispose d'une mémoire de lecture (read-only memory) (40) dans laquelle les valeurs d'amplitude du signal de test sont mémorisées par voie digitale, que le signal de sortie de la mémoire de lecture (40) est relié au haut-parleur (12) par l'intermédiaire du convertisseur digital/analogique (41) et d'un filtre passe-bas (42), que la sortie du microphone (10) dispose d'un convertisseur analogique/digital (43) aval, que le corrélateur de signaux à comparateur dispose d'une porte d'équivalence (44) à laquelle est alimentée le bit à valence maximale (bit de signe MSB) alimenté à partir de la sotie de la mémoire de lecture (40) et de la sortie du convertisseur analogique/digital (43) et disposant d'un compteur à rebours (45) dont l'entrée enable est reliée à la porte d'équivalence (44) et dont l'entrée de comptage est alimentée avec la cadence de lecture de la mémoire de lecture (40) et qui peut au début du test être réglé sur un niveau de compteur représentant la valeur de seuil et produisant une impulsion de sortie lorsque son réglage de zéro a été atteint. (fig.7).

8. Système de test conforme à la revendication 3, caractérisé par le fait que le générateur de signaux dispose d'un compteur multibit (48) cadencé par un générateur de cadence (46) et d'un circuit logique (49) et que le corrélateur de signaux à comparateur dispose d'une porte d'équivalence (44) et d'un compteur à rebours (45) à entrée de comptage, d'une entrée de réglage et d'une entrée enable pouvant être réglée au début du test via son entrée de réglage sur un niveau de compteur représentant la valeur de seuil et, après avoir atteint son réglage de zéro, produit une impulsion de sortie, que les sorties du compteur du compteur multibit (48) sont reliées au circuit logique (49) conçu en sorte que dans chaque période de comptage du compteur multibit se produise une impulsion de comptage à la sortie du circuit logique (49) lorsque un quart et trois quart du contenu de compteur maximum au compteur multibit (48) ont été atteint, que le circuit logique (49) est relié à l'entrée d'impulsion de comptage et que la porte d'équivalence (44) est reliée à l'entrée enable du compteur à rebours (45), que la sortie du compteur multibit (48) transportant le bit à valence maximale (MSB) est relié via un amplificateur intégrateur (42) au haut-parleur (12) et à une entrée de la porte d'équivalence (44), que la sortie du microphone (10) est dotée d'un convertisseur analogique digital (43) disposé en aval et que la sortie du convertisseur analogique/digital (43) transportant le bit à valence maximale (MSB) est relié à l'autre entrée de la porte d'équivalence (44) (fig.8).

9. Système de test conforme à la revendication 7 ou 8, caractérisé par le fait que le compteur à rebours (45) dispose d'un circuit aval de maintien de sortie d'impulsion (7) qui sort l'impulsion de sortie sous forme de signal "go".

10. Senseur (20) pour la réception du son destiné à un système de mesure du son au moyen d'un microphone et caractérisé par au moins un système de test selon l'une des revendications 3 à 9 dans lequel le minimum de un ou le minimum de trois haut-parleurs (11 à 13) présente (nt) chacun une fréquence de résonnance située au-dessus de la fréquence de signal de test.

11. Senseur conforme à la revendication 10, caractérisé par le fait que le ou les haut-parleur(s) (11 à 13) est/sont disposé(s) ensemble avec le microphone (10) dans un logement (21) à volume d'air hermétiquement clos.

12. Senseur conforme à la revendication 11, caractérisée par le fait que le logement (21), présentant dans l'ensemble une forme de pot, fermé par une plaque de montage (22) disposant d'ouvertures de son (23, 24) et à laquelle le microphone (10) et les hauts-parleurs (11 à 13) sont fixés à l'arrière des ouvertures de son (23, 24).

13. Senseur conforme à la revendication 12, caractérisé par le fait que l'ouverture de son (23) pour le microphone (10) est disposé de façon centrale et les ouvertures (24) pour le minimum de trois haut-parleurs (11 à 13) sont disposé de façon symétrique autour de l'ouverture de son (23) de microphone.

14. Senseur conforme à la revendication 12 ou 13, caractérisé par le fait que la plaque de montage (22) est située sur le coté du logement (21) orienté en direction du sol.
